# EUROPEAN PATENT APPLICATION

(11) **EP 4 685 963 A1**
(43) Date of publication of application: **28.01.2026**
(21) Application number: 23928815.2
(22) Date of filing: 27.12.2023
(51) Int. Cl.: H01M 50/293, H01M 10/658, H01M 50/291

(54) **HEAT TRANSFER SUPPRESSION SHEET, METHOD FOR PRODUCING SAME, AND BATTERY PACK**

(30) Priority: 22.03.2023 JP 2023045369
(71) Applicant: IBIDEN CO., LTD., Ogaki-shi, Gifu 503-8604 (JP)
(72) Inventor: WATANABE, Shogo, Ibi-gun, Gifu 501-0695 (JP); IDO, Takahiko, Ibi-gun, Gifu 501-0695 (JP)
(74) Representative: Hoffmann Eitle
(86) International application number: PCT/JP2023/047120
(87) International publication number: WO 2024/195249

(57) **Abstract**

To provide a heat transfer suppression sheet capable of reducing unevenness of a pressing force applied to a battery cell by an elastic sheet and suppressing a decrease in lifetime of a battery. A heat transfer suppression sheet (10) includes a heat insulation material (11) containing an inorganic particle, an elastic sheet (12) stacked on the heat insulation material (11), and a resin film (13) covering the heat insulation material (11) and the elastic sheet (12). The heat insulation material (11) has a pair of heat insulation material main surfaces (11a) orthogonal to a thickness direction, and the elastic sheet (12) has a pair of elastic sheet main surfaces (12a) orthogonal to a thickness direction and a plurality of elastic sheet end surfaces (12b) connecting the pair of elastic sheet main surfaces (12a). In addition, the heat insulation material (11) and the elastic sheet (12) are stacked such that the heat insulation material main surface (11a) and the elastic sheet main surface (12a) face each other. Further, at least one end surface of the plurality of elastic sheet end surfaces (12b) is pressed by the resin film (13) to be inclined inward as being away from the heat insulation material (11).

## Description

### TECHNICAL FIELD

The present invention relates to a heat transfer suppression sheet, a method for producing the same, and a battery pack including the heat transfer suppression sheet.

### BACKGROUND ART

In recent years, from the viewpoint of environmental protection, an electric vehicle or a hybrid vehicle driven by an electric motor has been actively developed. The electric vehicle or the hybrid vehicle is equipped with a battery pack in which a plurality of battery cells are connected in series or in parallel to serve as a power source for a driving electric motor.

As the battery cell, a lithium ion secondary battery, which has higher capacity and is capable of higher output than a lead-acid battery, a nickel-metal hydride battery, or the like, is mainly used, and the battery cell may expand during charging and discharging or due to repeated use. Therefore, a partition member capable of absorbing the expansion of the battery cell is preferably disposed between the battery cell and the battery cell.

For example, Patent Literature 1 discloses a separator including a heat insulation sheet and an elastic layer stacked on a surface of the heat insulation sheet, in which the elastic layer partially adheres to a surface of a case of a battery cell and includes an elastic protruding portion that is deformed by the expansion of the battery cell. In addition, a deformation space for the elastic protruding portion to move in an outer peripheral direction orthogonal to a pressing direction when pressed by the battery cell is formed between the battery cell and the separator.

According to the above Patent Literature 1, when the separator is pressed by the expanding battery cell, the elastic protruding portion is pushed out into the deformation space and is thinner. At this time, since the elastic protruding portion moves to the deformation space and is thinner, the expansion of the battery cell can be absorbed without difficulty.

### CITATION LIST

### PATENT LITERATURE

Patent Literature 1: WO 2020/262080

### SUMMARY OF INVENTION

### TECHNICAL PROBLEM

However, according to the separator described in the above Patent Literature 1, in the case of assembling the battery cell and the separator, a pressure by the elastic layer is partially applied to the battery cell. In addition, in the case where the battery cell expands during charging and discharging or due to repeated use, a repulsive force due to the elastic layer or the like applied to a main surface side of the battery cell may vary greatly depending on the location. In this way, in assembling the battery cell, when a region having a large repulsive force and a region having a small repulsive force are generated every time the battery cell is pressurized by the elastic layer or every time the battery cell repeatedly expands and shrinks, there is a concern that the lifetime of the battery is shortened.

The present invention has been made in view of the above problems, and an object of the present invention is to provide a heat transfer suppression sheet including an elastic sheet, capable of reducing unevenness of a pressing force applied to a battery cell by the elastic sheet and suppressing a decrease in lifetime of a battery, a method for producing the same, and a battery pack including the heat transfer suppression sheet.

### SOLUTION TO PROBLEM

The above object of the present invention is achieved by the following configuration [1] relating to a heat transfer suppression sheet.
[1] A heat transfer suppression sheet including:
   a heat insulation material containing an inorganic particle;
   an elastic sheet stacked on the heat insulation material; and
   a resin film covering the heat insulation material and the elastic sheet, in which
   the heat insulation material has a pair of heat insulation material main surfaces orthogonal to a thickness direction,
   the elastic sheet has a pair of elastic sheet main surfaces orthogonal to a thickness direction and a plurality of elastic sheet end surfaces connecting the pair of elastic sheet main surfaces,
   the heat insulation material and the elastic sheet are stacked such that at least one of the heat insulation material main surfaces and the one elastic sheet main surface face each other, and
   at least one end surface of the plurality of elastic sheet end surfaces is pressed by the resin film to be inclined inward as being away from the heat insulation material.
   Preferred embodiments of the present invention relating to the heat transfer suppression sheet relate to the following [2] to [9].
[2] The heat transfer suppression sheet according to [1], in which a surface pressure at a central portion of the elastic sheet main surface is lower than a surface pressure in an end region closer to at least one end surface side pressed by the resin film than the central portion.
[3] The heat transfer suppression sheet according to [1] or [2], in which
   the plurality of elastic sheet end surfaces include a pair of first end surfaces facing each other and a pair of second end surfaces facing each other and extending in a direction different from an extending direction of the first end surfaces, and
   among the first end surface and the second end surface, one is inclined inward as being away from the heat insulation material, and the other is substantially parallel to a thickness direction of the elastic sheet.
[4] The heat transfer suppression sheet according to [1] or [2], in which
   the plurality of elastic sheet end surfaces include a pair of first end surfaces facing each other and a pair of second end surfaces facing each other and extending in a direction different from an extending direction of the first end surfaces,
   the first end surface and the second end surface are both inclined inward as being away from the heat insulation material, and
   an inclination angle of the first end surface with respect to a thickness direction of the elastic sheet and an inclination angle of the second end surface with respect to the thickness direction of the elastic sheet are different from each other.
[5] The heat transfer suppression sheet according to [1] or [2], in which
   the plurality of elastic sheet end surfaces include a pair of first end surfaces facing each other and a pair of second end surfaces facing each other and extending in a direction different from an extending direction of the first end surfaces, and
   facing end surfaces in at least one of the first end surfaces and the second end surfaces have different inclination angles with respect to a thickness direction of the elastic sheet.
[6] The heat transfer suppression sheet according to any one of [1] to [5], in which the resin film contains at least one kind of resin selected from a polyethylene, a polypropylene, a polystyrene, a polyethylene terephthalate, and vinyl chloride.
[7] The heat transfer suppression sheet according to any one of [1] to [6], in which the heat insulation material and the elastic sheet are enclosed with the resin film.
[8] The heat transfer suppression sheet according to any one of [1] to [7], in which the elastic sheet contains at least one kind of material selected from a rubber and a thermoplastic elastomer.
[9] The heat transfer suppression sheet according to any one of [1] to [8], in which the heat insulation material further contains at least one kind selected from an inorganic fiber, an organic fiber, and an organic particle.
   In addition, the above object of the present invention is achieved by the following configuration [10] relating to a method for producing a heat transfer suppression sheet.
[10] A method for producing a heat transfer suppression sheet, which is a method for producing the heat transfer suppression sheet according to any one of [1] to [9], the method including:
   a stacking step of stacking the heat insulation material and the elastic sheet such that at least one of the heat insulation material main surfaces and the one elastic sheet main surface face each other to obtain a stacked body; and
   a shrinking step of covering a surface of the stacked body with the resin film and shrinking the resin film by heating such that the resin film presses at least one end surface of the plurality of elastic sheet end surfaces, in which
   in the shrinking step, at least one end surface of the plurality of elastic sheet end surfaces is inclined inward as being away from the heat insulation material.
   The above object of the present invention is also achieved by the following configuration [11] relating to a battery pack.
[11] A battery pack including: a plurality of battery cells; and the heat transfer suppression sheet according to any one of [1] to [9], in which the plurality of battery cells are connected in series or in parallel.

### ADVANTAGEOUS EFFECTS OF INVENTION

Since the heat transfer suppression sheet according to the present invention includes a heat insulation material containing an inorganic particle, an excellent heat insulation property can be obtained. In addition, since at least one end surface of the elastic sheet end surfaces is inclined inward and the surface pressure is high near the end surface, it is possible to suppress a strong force from being applied to an easily deformable region of a component disposed adjacent thereto. Further, when the component disposed adjacent thereto expands, the expansion of the component can be absorbed in a region of the elastic sheet where the surface pressure is low, so that it is possible to prevent an uneven pressing force from being applied to the component. As a result, the lifetime of the component can be prevented from being shortened.

Since the method for producing a heat transfer suppression sheet according to the present invention includes a shrinking step of shrinking the resin film by heating such that the resin film presses at least one elastic sheet end surface, the end surface can be inclined by an easy production step, and the surface pressure on the surface of the elastic sheet can be adjusted.

Since the battery pack according to the present invention includes the above heat transfer suppression sheet, it is possible to suppress transfer of heat generated at a certain location to another location, it is possible to prevent an uneven pressing force from being applied to the battery cell during assembly of the heat transfer suppression sheet and the battery cell or during normal charging and discharging, and it is possible to suppress a decrease in battery performance.

### BRIEF DESCRIPTION OF DRAWINGS

[Fig. 1A] Fig. 1A is a top view of a heat transfer suppression sheet according to a first embodiment of the present invention as viewed from a main surface side.
[Fig. 1B] Fig. 1B is a cross-sectional view taken along a line I-I in Fig. 1A.
[Fig. 1C] Fig. 1C is a cross-sectional view taken along a line II-II in Fig. 1A.
[Fig. 2] Fig. 2 is a cross-sectional view schematically showing a battery pack to which the heat transfer suppression sheet according to the first embodiment is applied.
[Fig. 3A] Fig. 3A is a top view of a heat transfer suppression sheet according to a second embodiment of the present invention as viewed from a main surface side.
[Fig. 3B] Fig. 3B is a cross-sectional view taken along a line III-III in Fig. 3A.
[Fig. 3C] Fig. 3C is a cross-sectional view taken along a line IV-IV in Fig. 3A.
[Fig. 4] Fig. 4 is a cross-sectional view showing a heat transfer suppression sheet according to a third embodiment of the present invention.

### DESCRIPTION OF EMBODIMENTS

The inventors of the present invention have conducted intensive studies on a method capable of reducing unevenness of a repulsive force by an elastic sheet depending on a location of a battery cell when a heat transfer suppression sheet is assembled between the battery cells or when the heat transfer suppression sheet is pressed due to expansion of the battery cell. As a result, the inventors of the present invention have found that the above problems can be solved by pressing an elastic sheet end surface with a resin film and inclining the end surface inward.

Hereinafter, embodiments of the present invention will be described in detail with reference to the drawings. Note that, the present invention is not limited to the embodiments described below, and can be freely changed and implemented without departing from the gist of the present invention.

### [Heat Transfer Suppression Sheet]

### <First Embodiment>

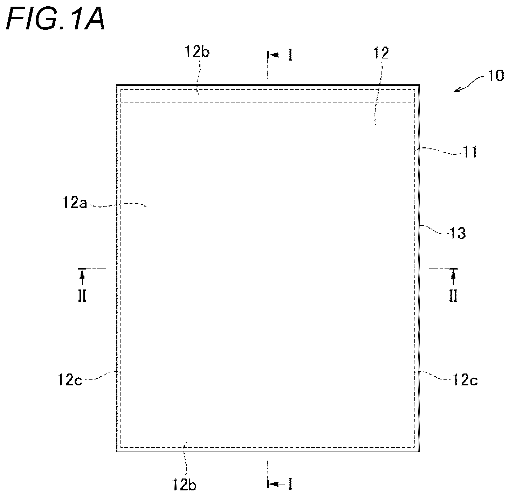

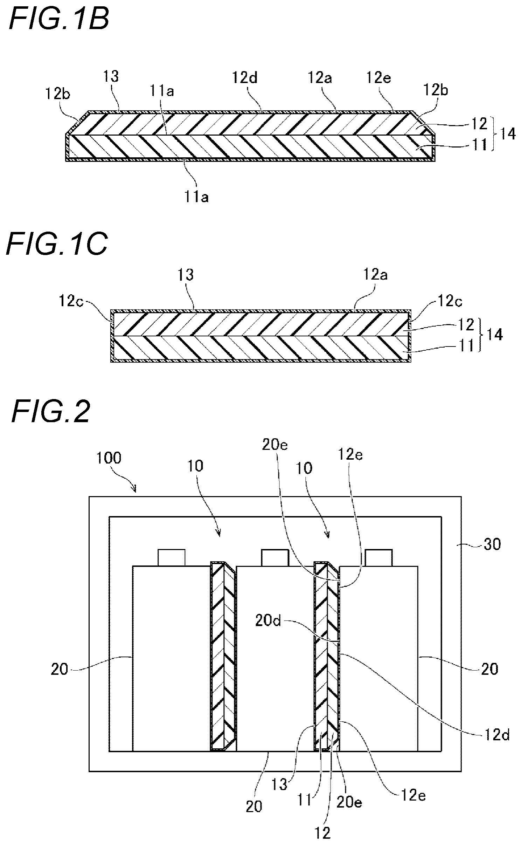

Fig. 1A is a top view of a heat transfer suppression sheet according to a first embodiment of the present invention as viewed from a main surface side, Fig. 1B is a cross-sectional view taken along a line I-I in Fig. 1A, and Fig. 1C is a cross-sectional view taken along a line II-II in Fig. 1A.

As shown in Figs. 1A to 1C, a heat transfer suppression sheet 10 according to the first embodiment includes a heat insulation material 11 containing an inorganic particle, an elastic sheet 12, and a resin film 13. The heat insulation material 11 has a pair of heat insulation material main surfaces 11a orthogonal to a thickness direction. The elastic sheet 12 has an elastic sheet main surface 12a orthogonal to the thickness direction and a plurality of elastic sheet end surfaces connecting the pair of elastic sheet main surfaces 12a. The elastic sheet end surfaces include a pair of first end surfaces 12b facing each other and a second end surface 12c extending in a direction different from that of the first end surface 12b. Then, the heat insulation material 11 and the elastic sheet 12 are stacked such that one heat insulation material main surface 11a and one elastic sheet main surface 12a face each other, to thereby form a stacked body 14. A surface of the stacked body 14 is covered with the resin film 13. That is, the stacked body 14 is enclosed with the resin film 13.

Note that, as shown in Fig. 1B, the pair of first end surfaces 12b are pressed by the resin film 13 to have a shape inclined inward as being away from the heat insulation material 11. On the other hand, the second end surface 12c is substantially parallel to a thickness direction of the elastic sheet 12.

In the first embodiment, since the pair of first end surfaces 12b are pressed by the resin film 13 and inclined, a density of the elastic sheet main surface 12a near the first end surface 12b is high. Therefore, a surface pressure at a central portion 12d in the elastic sheet main surface 12a is lower than a surface pressure at an end region 12e closer to the first end surface 12b than the central portion 12d.

Here, the surface pressure on the elastic sheet main surface 12a can be measured by using a commonly used surface pressure measuring device. The central portion 12d in the elastic sheet main surface 12a does not need to be completely central. For example, a region where a bisector of the pair of facing first end surfaces 12b and a bisector of a pair of facing second end surfaces 12c intersect can be defined as the central portion 12d. The end region 12e of the elastic sheet main surface 12a on a first end surface 12b side only needs to be near the first end surface 12b. For example, when a position as close to the first end surface 12b as possible is set as the end region 12e, the surface pressure at the end region 12e is higher than the surface pressure at the central portion 12d regardless of an inclination angle of the first end surface 12b.

Fig. 2 is a cross-sectional view schematically showing a battery pack to which the heat transfer suppression sheet 10 according to the first embodiment is applied. As shown in Fig. 2, the heat transfer suppression sheet 10 is disposed, for example, between a plurality of battery cells 20.

Since the heat transfer suppression sheet 10 according to the present embodiment includes the heat insulation material 11 containing an inorganic particle, a high heat insulation property can be obtained. Therefore, for example, in the battery pack in which the heat transfer suppression sheet 10 is disposed between the plurality of battery cells 20, in the case where the temperature of a certain battery cell 20 rises, it is possible to suppress heat transfer to the adjacent battery cell 20.

As described above, in the heat transfer suppression sheet 10, the end region 12e of the elastic sheet main surface 12a has a high density due to the pressing of the resin film 13, and has a high repulsive force. On the other hand, the battery cell 20 has a box shape, and has a feature that an end region 20e is less likely to be deformed than the central portion. Therefore, in the present embodiment,when the heat transfer suppression sheet 10 and the battery cell 20 are assembled, the end region 20e on a battery cell 20 side and the end region 12e on a resin film 13 side face each other. That is, a region of the battery cell 20 that is less likely to be deformed and a hard region of the resin film 13 that has a high repulsive force are disposed at positions facing each other. Therefore, it is possible to suppress a strong force from being applied to an easily deformable region of the battery cell 20, and to prevent the lifetime of the battery cell 20 from being shortened.

In a battery pack 100 assembled as described above, in the case where the battery cell 20 expands due to charging and discharging or the like, the battery cell 20 is more likely to be deformed in the central portion 20d than in the end region 20e, and thus the expansion of the battery cell 20 is larger in the central portion 20d. On the other hand, in the present embodiment, the surface pressure at the central portion 12d is lower than the surface pressure in the end region 12e in the elastic sheet main surface 12a. Therefore, since the expansion of the battery cell 20 can be absorbed by a region where the repulsive force is low in the resin film 13, that is, the central portion 12d, it is possible to prevent an uneven pressing force from being applied to the battery cell 20. As a result, the lifetime of the battery cell can be prevented from being shortened.

In the first embodiment, the second end surface 12c is not inclined and is substantially parallel to the thickness direction of the elastic sheet 12, but the second end surface 12c may also be pressed by the resin film 13 and inclined inward, similar to the first end surface 12b. Although not shown, in the case where both the first end surface 12b and the second end surface 12c are inclined, an inclination angle of the first end surface 12b with respect to the thickness direction of the elastic sheet 12 may be same as or different from an inclination angle of the second end surface 12c. Depending on the design of the battery, the expansion location may not be limited to the center. In such a case, the surface pressure in a desired region of the elastic sheet 12 can be reduced by adjusting the inclination angles of the first end surface 12b and the second end surface 12c and changing a pressing force of the resin film 13 to the elastic sheet 12. The inclination angles of the first end surface 12b and the second end surface 12c of the elastic sheet 12 may be freely designed such that the easily deformable region of the battery cell and the region where the surface pressure of the elastic sheet 12 is low face each other.

In the first embodiment, the heat insulation material 11 and the elastic sheet 12 have substantially the same size, but in the present invention, the heat insulation material 11 and the elastic sheet 12 do not need to have the same size. For example, when the elastic sheet 12 is formed to be smaller than the heat insulation material 11, a material cost of the elastic sheet 12 can be reduced. Such an example will be described below as a second embodiment.

### <Second Embodiment>

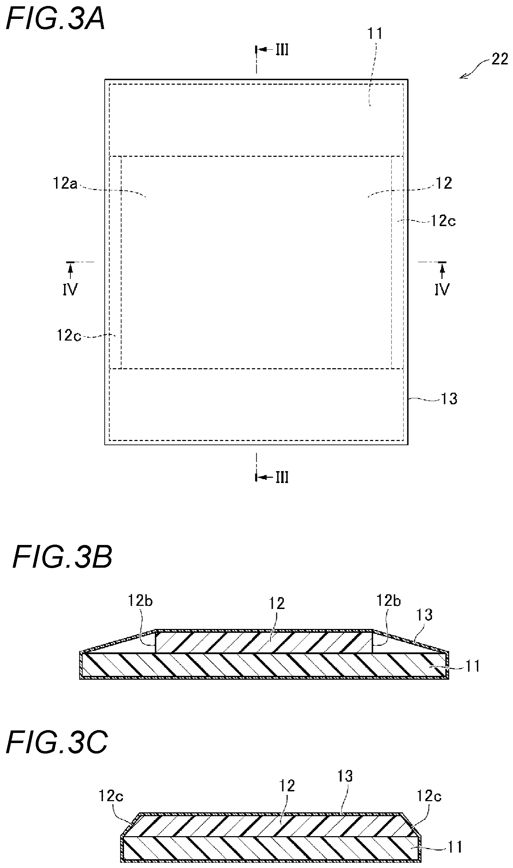

Fig. 3A is a top view of a heat transfer suppression sheet according to the second embodiment of the present invention as viewed from a main surface side, Fig. 3B is a cross-sectional view taken along a line III-III in Fig. 3A, and Fig. 3C is a cross-sectional view taken along a line IV-IV in Fig. 3A. In the second embodiment shown in Figs. 3A to 3C, the same portions as those of the first embodiment are denoted by the same reference numerals, and detailed description thereof will be omitted or simplified.

As shown in Figs. 3A to 3C, in a heat transfer suppression sheet 22, a length of the second end surface 12c of the elastic sheet 12 is substantially same as a length of one side of the heat insulation material 11. However, a length of the first end surface 12b of the elastic sheet 12 is formed to be shorter than a length of the other side of the heat insulation material 11. That is, the second end surface 12c extending in a direction parallel to a longitudinal direction of the heat insulation material 11 is at a position same as that of an end surface of the heat insulation material 11. The second end surface 12c is pressed by the resin film 13 and is inclined inward as being away from the heat insulation material 11. On the other hand, each of the pair of first end surfaces 12b extending in a direction orthogonal to the longitudinal direction of the heat insulation material 11 is positioned closer to a center than to the end surface of the heat insulation material 11, is not inclined, and is substantially parallel to a thickness direction of the elastic sheet 12.

In the heat transfer suppression sheet 22 according to the second embodiment configured as described above, a surface pressure of the elastic sheet main surface 12a is high near the inclined second end surface 12c. Therefore, when the battery cell 20 and the heat transfer suppression sheet 10 are assembled in the battery pack 100 shown in Fig. 2, it is possible to suppress a strong force from being applied to an easily deformable region of the battery cell 20. In addition, when the battery cell 20 expands, a central portion of the elastic sheet 12 having a low surface pressure can absorb the expansion, and thus it is possible to prevent an uneven pressing force from being applied to the battery cell 20. As a result, the lifetime of the battery cell 20 can be prevented from being shortened.

### <Third Embodiment>

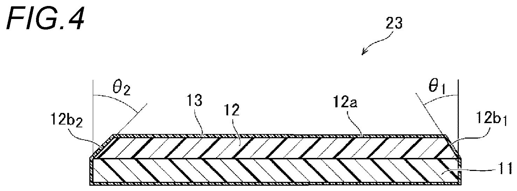

Fig. 4 is a cross-sectional view showing a heat transfer suppression sheet according to a third embodiment of the present invention. Note that, in the third embodiment, a top view is omitted. In a heat transfer suppression sheet 23 according to the third embodiment, for example, in the pair of facing first end surfaces 12b, an inclination angle θ₁ of one first end surface 12b₁ and an inclination angle θ₂ of the other first end surface 12b₂ are different from each other.

In this way, since a surface pressure in a desired region can be changed by making the inclination angles different from each other also in the pair of facing elastic sheet end surfaces, a region where the surface pressure is high can be adjusted according to the design of the battery cell 20.

Although the heat transfer suppression sheets having various shapes have been described above, in the present invention, it is sufficient that at least one end surface of the plurality of elastic sheet end surfaces is pressed by the resin film 13 to be inclined inward as being away from the heat insulation material 11. In the present invention, the heat transfer suppression sheet may include, in addition to the heat insulation material 11 and the elastic sheet 12, a layer having the same function or a layer having a different function. The position of the other layer may be between the heat insulation material 11 and the elastic sheet 12, on an outer surface on a heat insulation material 11 side, or on an outer surface on the elastic sheet 12 side.

In the present invention, the heat insulation material 11 and the elastic sheet 12 do not need to be rectangular. The elastic sheet 12 may have a polygonal shape or the like in which a corner portion is cut as necessary as long as at least one end surface of the elastic sheet 12 is pressed by the resin film 13 to be inclined. Further, the resin film 13 does not need to cover the entire surface of the stacked body 14 as long as it is disposed to be able to press the elastic sheet end surface.

Next, materials constituting the heat transfer suppression sheets according to the above first to third embodiments will be described in detail.

### [Elastic Sheet]

As the elastic sheet, a known elastic sheet can be used, and a sheet formed of a rubber or a thermoplastic elastomer having elasticity capable of flexibly deforming with respect to deformation of the battery cell 20 can be used.

The rubber may be either a synthetic rubber or a natural rubber, and examples of the synthetic rubber include a styrene butadiene rubber, a butadiene rubber, a chloroprene rubber, an isoprene rubber, a butyl rubber, an ethylene propylene rubber, a nitrile rubber, a silicone rubber, a fluoro rubber, an acrylic rubber, a urethane rubber, a polysulfide rubber, an epichlorohydrin rubber, and a silicone foam.

Examples of the thermoplastic elastomer include polystyrene-based, polyolefin-based, vinyl chloride-based, polyurethane-based, polyester-based, polyamide-based, and polybutadiene-based thermoplastic elastomers. The elastomer may be either porous or nonporous. Note that, in the case of being porous, the cell structure may be either a closed-cell type or an open-cell type.

### (Size of Elastic Sheet)

A thickness of the elastic sheet 12 is not particularly limited, and is preferably 1 mm or more and 10 mm or less in order to effectively obtain an effect of the elastic sheet 12. As described above, the size of the main surface 12a orthogonal to the thickness direction of the elastic sheet 12 is preferably substantially the same as the size of the main surface 11a of the heat insulation material 11, but is not particularly limited. However, when the elastic sheet 12 is remarkably smaller than the heat insulation material 11, a pressure applied to the battery cell is uneven, and the effect of the present invention may not be obtained. Therefore, the size of the main surface 12a of the elastic sheet 12 is preferably larger than the surface of the battery cell facing the elastic sheet 11.

### [Resin Film]

As a material constituting the resin film, a film containing at least one kind of resin selected from a polyethylene, a polypropylene, a polystyrene, vinyl chloride, nylon, acrylic, an epoxy resin, a polyurethane, a polyether ether ketone, a polyetherimide, a polyethylene terephthalate, a polyphenyl sulfide, a polycarbonate, and an aramid can be selected.

Note that, in the case of covering the surface of the stacked body 14 including the heat insulation material 11 and the elastic sheet 12 with the resin film 13, shrink packaging is preferably used. Therefore, it is more preferable to use a resin film made of a material suitable for shrink packaging. Examples of such a material include a polyethylene, a polypropylene, a polystyrene, a polyethylene terephthalate, and vinyl chloride.

### (Properties of Resin Film)

In the present embodiment, the resin film 13 is in close contact with at least one end surface of the elastic sheet end surfaces of the elastic sheet 12, and has an effect of pressing to incline the end surface. Therefore, the resin film preferably has an appropriate tensile strength and an appropriate tensile elongation.

### (Thickness of Resin Film)

When a thickness of the resin film 13 is more than 1 mm, it is difficult to for the resin film 13 follow a shape of the elastic sheet 11, and cracks or breaks may occur. Therefore, the thickness of the resin film 13 is preferably 1 mm or less, more preferably 0.1 mm or less, and still more preferably 0.05 mm or less.

On the other hand, the thickness of the resin film 13 is not particularly limited in lower limit, and is preferably 0.005 mm or more, and more preferably 0.01 mm or more in order to obtain a desired tensile strength.

### <Other Materials Contained in Resin Film>

Since the resin film 13 is in contact with the battery cell 20, the resin film 13 preferably has flame retardancy, and specifically preferably contains an inorganic substance or a flame retardant. As a material constituting the resin film 13, examples of the inorganic substance include talc, calcium carbonate, aluminum hydroxide, titanium oxide, vermiculite, zeolite, synthetic silica, zirconia, zircon, barium titanate, zinc oxide, and alumina, and examples of the flame retardant include a bromine-based flame retardant, a chlorine-based flame retardant, a phosphorus-based flame retardant, a boron-based flame retardant, a silicone-based flame retardant, and a nitrogen-containing compound.

### [Heat Insulation Material]

The heat insulation material 11 used in the heat transfer suppression sheet according to the present embodiment is not particularly limited as long as it has a heat insulation effect. A thermal conductivity can be mentioned as an indicator indicating the heat insulation effect. In the present embodiment, the thermal conductivity of the heat insulation material 11 is preferably less than 1 (W/m·K), more preferably less than 0.5 (W/m·K), and still more preferably less than 0.2 (W/m·K). Further, the thermal conductivity of the heat insulation material 11 is even more preferably less than 0.1 (W/m·K), even still more preferably less than 0.05 (W/m·K), and particularly preferably less than 0.02 (W/m·K).

Note that, the thermal conductivity of the heat insulation material can be measured in accordance with "Testing method for thermal conductivity of refractories" described in JIS R 2251.

### (Size of Heat Insulation Material)

In the case where the heat insulation material 11 and the elastic sheet 12 are stacked, the size of the heat insulation material main surface 11a and the size of the elastic sheet main surface 12a orthogonal to these thicknesses may be substantially same as or different from each other. However, as described above, in the case where the elastic sheet 12 is remarkably smaller than the heat insulation material 11, a pressure may be unevenly applied to the battery cell 20, which may impair the effect of the present invention. Therefore, the size of the elastic sheet main surface 11a is preferably designed within a range that does not impair the effect of the present invention.

The heat insulation material 11 contains an inorganic particle, and as other components, for example, a material containing at least one kind selected from an inorganic fiber, an organic fiber, and an organic particle can be used. Specific examples thereof are shown below.

### <Inorganic Particle>

As the inorganic particle, a single kind of inorganic particle may be used, or two or more kinds of inorganic particles may be used in combination. From the viewpoint of a heat transfer suppression effect, as the kind of the inorganic particle, a particle composed of at least one kind of inorganic material selected from an oxide particle, a carbide particle, a nitride particle, and an inorganic hydrate particle is preferably used, and more preferably an oxide particle is used. The form thereof is not particularly limited. It is preferable to contain at least one kind selected from a nanoparticle, a hollow particle, and a porous particle. Specifically, a silica nanoparticle, a metal oxide particle, an inorganic balloon such as a microporous particle or a hollow silica particle, a particle composed of a thermally expandable inorganic material, a particle composed of a hydrous porous material, or the like can also be used.

When an average secondary particle diameter of the inorganic particle is 0.01 µm or more, the inorganic particle is easily available and an increase in production cost can be suppressed. When the average secondary particle diameter is 200 µm or less, a desired heat insulation effect can be obtained. Therefore, the average secondary particle diameter of the inorganic particle is preferably 0.01 µm or more and 200 µm or less, and more preferably 0.05 µm or more and 100 µm or less.

Note that, when two or more kinds of inorganic particles having different heat transfer suppression effects are combined, a heating element can be cooled in multiple stages and a heat absorption effect can be exhibited over a wider temperature range. Specifically, it is preferable to use a large-diameter particle and a small-diameter particle in combination. For example, in the case of using a nanoparticle as one of the inorganic particles, it is preferable to contain an inorganic particle composed of a metal oxide as the other inorganic particle. Hereinafter, the inorganic particle will be described in more detail, with the small-diameter inorganic particle as a first inorganic particle and the large-diameter inorganic particle as a second inorganic particle.

### <First Inorganic Particle>

### (Oxide Particle)

The oxide particle has a high refractive index and has a high effect of diffusely reflecting light, so that when the oxide particle is used as the first inorganic particle, radiant heat transfer can be suppressed, particularly in a high temperature range with abnormal heat generation or the like. As the oxide particle, at least one kind of particle selected from silica, titania, zirconia, zircon, barium titanate, zinc oxide, and alumina can be used. That is, among the above oxide particle that can be used as the inorganic particle, only one kind or two or more kinds of oxide particles may be used. Particularly, silica is a component having a high heat insulation property, and titania is a component having a high refractive index compared to other metal oxides, and has a high effect of diffusely reflecting light and blocking radiant heat in a high temperature range of 500°C or higher. Therefore, silica and titania are most preferably used as the oxide particle.

### (Average primary particle diameter of oxide particle: 0.001 µm or more and 50 µm or less)

Since the particle diameter of the oxide particle may influence an effect of reflecting radiant heat, when an average primary particle diameter thereof is limited to a predetermined range, an even higher heat insulation property can be obtained.

That is, when the average primary particle diameter of the oxide particle is 0.001 µm or more, a wavelength thereof is sufficiently larger than a wavelength of light that contributes to heating, and it diffusely reflects the light efficiently. Therefore, in a high temperature range of 500°C or higher, the radiant heat transfer of heat within the heat transfer suppression sheet can be suppressed, and the heat insulation property can be further improved.

On the other hand, when the average primary particle diameter of the oxide particle is 50 µm or less, even with compression, the number of contact points between the particles does not increase, and it is difficult to form a conductive heat transfer path. Therefore, the influence on the heat insulation property particularly in a normal temperature range where the conductive heat transfer is dominant can be reduced.

Note that, in the present invention, the average primary particle diameter can be determined by observing particles with a microscope, comparing the particles with a standard scale, and taking an average of any 10 particles.

### (Nanoparticle)

In the present invention, the nanoparticle refers to a nanometer-order particle having a spherical or nearly spherical shape and having an average primary particle diameter of less than 1 µm. The nanoparticle has a low density and thus suppresses the conductive heat transfer, and when the nanoparticle is used as the first inorganic particle, void portions are further finely dispersed, so that an excellent heat insulation property of suppressing convective heat transfer can be obtained. Therefore, it is preferable to use a nanoparticle since it can suppress the conduction of heat between adjacent nanoparticles during normal use of a battery in a normal temperature range.

Further, when the nanoparticle having a small average primary particle diameter is used as the oxide particle, even in the case where the heat transfer suppression sheet is compressed by expansion due to thermal runaway of the battery cell and the internal density increases, an increase in conductive heat transfer of the heat transfer suppression sheet can be suppressed. This is thought to be because the nanoparticle tends to form fine void portions between particles due to a repulsive force caused by static electricity, and the bulk density thereof is low, so that the particle is used for filling so as to provide a cushioning property.

Note that, in the case of using the nanoparticle as the first inorganic particle, the kind thereof is not particularly limited as long as the above definition of nanoparticle is met. For example, since a silica nanoparticle is a material having a high heat insulation property and has a few contact points between particles, the amount of heat conducted by the silica nanoparticle is smaller than that in a case of using a silica particle having a large particle diameter. **In** addition, since a generally available silica nanoparticle has a bulk density of about 0.1 (g/cm³), for example, even in the case where battery cells disposed on both sides of the heat transfer suppression sheet thermally expand and a large compressive stress is applied to the heat transfer suppression sheet, the size (area) or the number of contact points between silica nanoparticles does not increase remarkably, and the heat insulation property can be maintained. Therefore, it is preferable to use a silica nanoparticle as the nanoparticle. Examples of the silica nanoparticle include wet silica, dry silica, and aerogel. A silica nanoparticle that is particularly suitable for the present embodiment will be described below.

Generally, the particles of wet silica are agglomerated, whereas the particles of dry silica can be dispersed. Since the conductive heat transfer is dominant in heat conduction in a temperature range of 90°C or lower, the dry silica in which particles can be dispersed can provide a more excellent heat insulation performance than the wet silica.

Note that, the heat transfer suppression sheet according to the present embodiment is preferably produced by a production method in which a mixture containing materials is processed into a sheet by a dry method. Therefore, as the inorganic particle, it is preferable to use dry silica or silica aerogel which has a low thermal conductivity.

### (Average primary particle diameter of nanoparticle: 1 nm or more and 100 nm or less)

When the average primary particle diameter of the nanoparticle is limited to a predetermined range, an even higher heat insulation property can be obtained.

That is, when the average primary particle diameter of the nanoparticle is 1 nm or more and 100 nm or less, the convective heat transfer and the conductive heat transfer of the heat within the heat transfer suppression sheet can be suppressed particularly in a temperature range of lower than 500°C, and the heat insulation property can be further improved. In addition, even in the case of applying a compressive stress, void portions remaining between the nanoparticles and contact points between many particles can suppress the conductive heat transfer, and the heat insulation property of the heat transfer suppression sheet can be maintained.

Note that, the average primary particle diameter of the nanoparticle is more preferably 2 nm or more, and still more preferably 3 nm or more. On the other hand, the average primary particle diameter of the nanoparticle is more preferably 50 nm or less, and still more preferably 10 nm or less.

### (Inorganic Hydrate Particle)

The inorganic hydrate particle exhibits a so-called "heat absorption effect" that the inorganic hydrate particle receives heat from a heating element, thermally decomposes when reaching a thermal decomposition start temperature or higher, releases crystal water thereof, and lowers the temperature of the heating element and surroundings. The inorganic hydrate particle forms a porous material after releasing the crystal water, and exhibits a heat insulation effect due to countless air pores thereof.

Specific examples of the inorganic hydrate include aluminum hydroxide (Al(OH)₃), magnesium hydroxide (Mg(OH)₂), calcium hydroxide (Ca(OH)₂), zinc hydroxide (Zn(OH)₂), iron hydroxide (Fe(OH)₂), manganese hydroxide (Mn(OH)₂), zirconium hydroxide (Zr(OH)₂), and gallium hydroxide (Ga(OH)₃).

For example, aluminum hydroxide has about 35% crystal water, and as shown in the following formula, thermally decomposes to release the crystal water and exhibits a heat absorption effect. Then, after releasing the crystal water, aluminum hydroxide forms alumina (Al₂O₃), which is a porous material, and functions as a heat insulation material.

2Al(OH)₃ → Al₂O₃ + 3H₂O

Note that, as described above, the heat transfer suppression sheet 10 is preferably interposed between, for example, battery cells, but in a battery cell that has experienced thermal runaway, the temperature rapidly rises to over 200°C and continues to rise to about 700°C. Therefore, it is preferable that the inorganic particle contained in the heat insulation material is composed of an inorganic hydrate whose thermal decomposition start temperature is 200°C or higher.

The thermal decomposition start temperature of the above inorganic hydrates is about 200°C for aluminum hydroxide, is about 330°C for magnesium hydroxide, is about 580°C for calcium hydroxide, is about 200°C for zinc hydroxide, is about 350°C for iron hydroxide, is about 300°C for manganese hydroxide, is about 300°C for zirconium hydroxide, and is about 300°C for gallium hydroxide. All of these almost overlap the temperature range of the rapid temperature rise of a battery cell that has experienced thermal runaway, and can effectively prevent the temperature rise. Therefore, these are preferred inorganic hydrates.

### (Average secondary particle diameter of inorganic hydrate particle: 0.01 µm or more and 200 µm or less)

In the case of using the inorganic hydrate particle as the first inorganic particle, when the average particle diameter thereof is too large, it takes a certain amount of time for the first inorganic particle (inorganic hydrate) near the center of the heat insulation material to reach the thermal decomposition temperature thereof, so that the first inorganic particle near the center of the heat insulation material may not be completely thermally decomposed. Therefore, the average secondary particle diameter of the inorganic hydrate particle is preferably 0.01 µm or more and 200 µm or less, and more preferably 0.05 µm or more and 100 µm or less.

### (Particle Composed of Thermally Expandable Inorganic Material)

Examples of the thermally expandable inorganic material include vermiculite, bentonite, mica, and perlite.

### (Particle Composed of Hydrous Porous Material)

Specific examples of the hydrous porous material include zeolite, kaolinite, montmorillonite, acid clay, diatomaceous earth, wet silica, dry silica, aerogel, mica, and vermiculite.

### (Inorganic Balloon)

The heat insulation material used in the present invention may contain an inorganic balloon as the first inorganic particle.

When an inorganic balloon is contained, the convective heat transfer or the conductive heat transfer of the heat within the heat insulation material can be suppressed in a temperature range of lower than 500°C, and the heat insulation property of the heat insulation material can be further improved.

As the inorganic balloon, at least one kind selected from a whitebait balloon, a silica balloon, a fly ash balloon, a barite balloon, and a glass balloon can be used.

### (Content of inorganic balloon: 60 mass% or less with respect to total mass of heat insulation material)

A content of the inorganic balloon is preferably 60 mass% or less with respect to a total mass of the heat insulation material.

### (Average particle diameter of inorganic balloon: 1 µm or more and 100 µm or less)

An average particle diameter of the inorganic balloon is preferably 1 µm or more and 100 µm or less.

### <Second Inorganic Particle>

In the case where the heat transfer suppression sheet 10 contains two kinds of inorganic particles, the second inorganic particle is not particularly limited as long as it is different from the first inorganic particle in material, particle diameter, or the like. As the second inorganic particle, an oxide particle, a carbide particle, a nitride particle, an inorganic hydrate particle, a silica nanoparticle, a metal oxide particle, an inorganic balloon such as a microporous particle or a hollow silica particle, a particle composed of a thermally expandable inorganic material, a particle composed of a hydrous porous material, or the like can be used. Details of these are as described above.

Note that, the nanoparticle has extremely low conductive heat transfer, and can maintain an excellent heat insulation property even in the case where a compressive stress is applied to the heat transfer suppression sheet. In addition, a metal oxide particle such as titania has a high effect of blocking radiant heat. Further, when a large-diameter inorganic particle and a small-diameter inorganic particle are used, the small-diameter inorganic particle enters gaps between the large-diameter inorganic particles, leading to a more dense structure, and the heat transfer suppression effect can be improved. Therefore, for example, in the case of using the nanoparticle as the first inorganic particle, it is preferable that the heat transfer suppression sheet further contains a particle composed of a metal oxide having a diameter larger than that of the first inorganic particle as the second inorganic particle.

Examples of the metal oxide include silicon oxide, titanium oxide, aluminum oxide, barium titanate, zinc oxide, zircon, and zirconium oxide. Particularly, titanium oxide (titania) is a component having a high refractive index compared to other metal oxides, and has a high effect of diffusely reflecting light and blocking radiant heat in a high temperature range of 500°C or higher. Therefore, titania is most preferably used.

In the case where at least one kind of particle selected from a dry silica particle and silica aerogel is used as the first inorganic particle, and at least one kind of particle selected from titania, zircon, zirconia, silicon carbide, zinc oxide, and alumina is used as the second inorganic particle, in order to obtain an excellent heat insulation performance within a temperature range of 90°C or lower, the content of the first inorganic particle is preferably 50 mass% or more, more preferably 60 mass% or more, and still more preferably 70 mass% or more, with respect to a total mass of the inorganic particles. In addition, the content of the first inorganic particle is preferably 95 mass% or less, more preferably 90 mass% or less, and still more preferably 80 mass% or less, with respect to the total mass of the inorganic particles.

On the other hand, in order to obtain an excellent heat insulation performance within a temperature range of higher than 90°C, the content of the second inorganic particle is preferably 5 mass% or more, more preferably 10 mass% or more, and still more preferably 20 mass% or more, with respect to the total mass of the inorganic particles. In addition, the content of the second inorganic particle is preferably 50 mass% or less, more preferably 40 mass% or less, and still more preferably 30 mass% or less, with respect to the total mass of the inorganic particles.

### (Average primary particle diameter of second inorganic particle)

In the case where the second inorganic particle composed of a metal oxide is contained in the heat transfer suppression sheet, when an average primary particle diameter of the second inorganic particle is 1 µm or more and 50 µm or less, the radiant heat transfer can be efficiently suppressed in a high temperature range of 500°C or higher. The average primary particle diameter of the second inorganic particle is more preferably 5 µm or more and 30 µm or less, and most preferably 10 µm or less.

### (Content of Inorganic Particle)

In the present embodiment, when a total content of the inorganic particles in the heat insulation material is appropriately controlled, a sufficient heat insulation property can be ensured in the heat insulation material.

The total content of the inorganic particles is preferably 60 mass% or more, and more preferably 70 mass% or more, with respect to the total mass of the heat insulation material. When the total content of the inorganic particles is too large, the content of the organic fiber decreases relatively. Therefore, in order to obtain a sufficient framework reinforcement effect and inorganic particle retention effect, the total content of the inorganic particles is preferably 95 mass% or less, and more preferably 90 mass% or less, with respect to the total mass of the heat insulation material.

Note that, the content of the inorganic particle in the heat insulation material can be calculated, for example, by heating the heat insulation material at 800°C, decomposing organic components, and then measuring the mass of the remaining portion.

### <Inorganic Fiber>

As the inorganic fiber, a single kind of inorganic fiber may be used, or two or more kinds of inorganic fibers may be used in combination. Examples of the inorganic fiber include ceramic-based fibers such as a silica fiber, an alumina fiber, an alumina silicate fiber, a zirconia fiber, a carbon fiber, a soluble fiber, a refractory ceramic fiber, an aerogel composite, a magnesium silicate fiber, an alkaline earth silicate fiber, a potassium titanate fiber, a silicon carbide fiber, and a potassium titanate whisker fiber, glass-based fibers such as a glass fiber, glass wool, and slag wool, and natural mineral-based fibers other than the above fibers, such as rock wool, a basalt fiber, wollastonite, and a mullite fiber.

These inorganic fibers are preferred in terms of heat resistance, strength, easy availability, and the like. Among the inorganic fibers, a silica-alumina fiber, an alumina fiber, a silica fiber, rock wool, an alkaline earth silicate fiber, and a glass fiber are particularly preferred from the viewpoint of handling properties.

The cross-sectional shape of the inorganic fiber is not particularly limited, and examples thereof include a circular cross section, a flat cross section, a hollow cross section, a polygonal cross section, and a core cross section. Among them, an irregular cross section fiber having a hollow cross section, a flat cross section, or a polygonal cross section can be preferably used since the heat insulation property is slightly improved.

### (Average Fiber Length of Inorganic Fiber)

The lower limit of an average fiber length of the inorganic fiber is preferably 0.1 mm, and the lower limit is more preferably 0.5 mm. On the other hand, the upper limit of the average fiber length of the inorganic fiber is preferably 50 mm, and the upper limit is more preferably 10 mm. When the average fiber length of the inorganic fiber is less than 0.1 mm, the inorganic fibers are unlikely to be entangled with each other, and the mechanical strength of the heat insulation material may decrease. On the other hand, when the average fiber length is more than 50 mm, a reinforcement effect can be obtained, but the inorganic fibers may not be able to entangle tightly with each other, or a single inorganic fiber may curl up, and thus the heat insulation property may decrease.

The lower limit of an average fiber diameter of the inorganic fiber is preferably 1 µm, the lower limit is more preferably 2 µm, and the lower limit is still more preferably 3 µm. On the other hand, the upper limit of the average fiber diameter of the inorganic fiber is preferably 15 µm, and the upper limit is more preferably 10 µm. When the average fiber diameter of the inorganic fiber is less than 1 µm, the mechanical strength of the inorganic fiber may decrease. In addition, from the viewpoint of the influence on human health, the average fiber diameter of the inorganic fiber is preferably 3 µm or more. On the other hand, when the average fiber diameter of the inorganic fiber is larger than 15 µm, solid heat transfer using the inorganic fiber as a medium may increase, resulting in a decrease in heat insulation property, and the moldability and the strength of the heat transfer suppression sheet may deteriorate.

### (Content of Inorganic Fiber)

In the present embodiment, in the case where the heat insulation material contains an inorganic fiber, a content of the inorganic fiber is preferably 3 mass% or more and 15 mass% or less with respect to the total mass of the heat insulation material.

In addition, the content of the inorganic fiber is preferably 5 mass% or more and 10 mass% or less with respect to the total mass of the heat insulation material. With such contents, a shape retention property, pressing force resistance, wind pressure resistance, and an ability to retain the inorganic particle of the inorganic fiber are exhibited in a well-balanced manner. In addition, when the content of the inorganic fiber is appropriately controlled, the organic fiber and the inorganic fiber are entangled with each other to form a three-dimensional network, so that an effect of retaining the inorganic particle and other blending materials to be described later can be further improved.

### <Organic Fiber>

The organic fiber has an effect of imparting flexibility to the heat insulation material, and has an effect of increasing the strength of the heat insulation material by the organic fiber forming a framework. In addition, when the inorganic particle and other organic fibers are fused to the surface of the organic fiber, the effect of increasing the strength of the sheet and the effect of retaining the shape of the sheet can be further improved. In addition, when the heat insulation material contains the organic fiber in an appropriate content, a plurality of void portions are formed inside the heat insulation material, and when the heat insulation material is heated, air and moisture can be released to the outside through the void portions.

A single-component organic fiber such as a cellulose fiber may be used as a material for the organic fiber in the heat insulation material, and it is preferable to use a binder fiber having a core-sheath structure. The binder fiber having a core-sheath structure includes a core portion extending in a longitudinal direction of the fiber, and a sheath portion formed to cover an outer peripheral surface of the core portion. In this case, the core portion is composed of a first organic material, the sheath portion is composed of a second organic material, and a melting point of the first organic material is higher than a melting point of the second organic material.

### (First Organic Material)

In the present embodiment, in the case of using the binder fiber having a core-sheath structure, the first organic material constituting the core portion is not particularly limited as long as it has a melting point higher than that of the sheath portion, that is, the second organic material, present on the outer peripheral surface of the core portion. Examples of the first organic material include at least one kind selected from a polyethylene terephthalate, a polypropylene, and nylon.

### (Second Organic Material)

The second organic material is not particularly limited as long as it has a melting point lower than the first organic material constituting the organic fiber. Examples of the second organic material include at least one kind selected from a polyethylene terephthalate, a polyethylene, a polypropylene, and nylon.

Note that, the melting point of the second organic material is preferably 90°C or higher, and more preferably 100°C or higher. In addition, the melting point of the second organic material is preferably 150°C or lower, and more preferably 130°C or lower.

### (Content of Organic Fiber)

When a content of the organic fiber in the heat insulation material is appropriately controlled, a sufficient framework reinforcement effect can be obtained.

The content of the organic fiber is preferably 5 mass% or more, and more preferably 10 mass% or more, with respect to the total mass of the heat insulation material. When the content of the organic fiber is too large, the content of the inorganic particle decreases relatively. Therefore, in order to obtain a desired heat insulation performance, the content of the organic fiber is preferably 25 mass% or less, and more preferably 20 mass% or less, with respect to the total mass of the heat insulation material.

### (Fiber Length of Organic Fiber)

A fiber length of the organic fiber is not particularly limited, and from the viewpoint of ensuring moldability and processability, an average fiber length of the organic fiber is preferably 10 mm or less.

On the other hand, from the viewpoint of making the organic fiber function as a framework and ensuring a compressive strength of the heat transfer suppression sheet, the average fiber length of the organic fiber is preferably 0.5 mm or more.

### <Organic Particle>

As the organic particle, a hollow polystyrene particle or the like can be used.

### <Other Blending Materials>

### (Hot Melt Powder)

In the heat transfer suppression sheet, in addition to the binder fiber and the inorganic particle, the mixture may contain a hot melt powder. The hot melt powder is a powder that contains, for example, a third organic material different from the first organic material and the second organic material, and has a property of being melted by heating. By containing the hot melt powder in the mixture and heating the same, when the hot melt powder is cooled after melting, the hot melt powder, including the surrounding inorganic particle, hardens. Therefore, falling off of the inorganic particle from the heat insulation material can be further suppressed.

Examples of the hot melt powder include those having various melting points, and it is sufficient to select a hot melt powder having an appropriate melting point in consideration of the melting points of the core portion and the sheath portion of the binder fiber used. In the case of using the binder fiber having a core-sheath structure as the organic fiber, when the third organic material, which is a component constituting the hot melt powder, has a melting point lower than that of the first organic material constituting the organic fiber, the heating temperature can be set to melt the sheath portion and the hot melt powder while the core portion remains. For example, when the melting point of the hot melt powder is equal to or lower than the melting point of the sheath portion, it is sufficient to set the heating temperature during the production between the melting point of the core portion and the melting point of the sheath portion, so that the heating temperature can be set much more easily.

On the other hand, the kind of the hot melt powder to be used can also be selected such that the melting point of the hot melt powder is between the melting point of the core portion and the melting point of the sheath portion. In the case of using the hot melt powder having such a melting point, when both the sheath portion and the hot melt powder are cooled and harden after melting, the organic fiber (core portion) and the surrounding molten sheath portion, and the hot melt powder present in gaps in the inorganic particle firstly harden. As a result, the position of the organic fiber can be fixed, and thereafter the molten sheath portion is fused to the organic fiber, making it easier to form a three-dimensional framework. Therefore, the strength of the entire sheet can be further improved.

When the melting point of the third organic material constituting the hot melt powder is sufficiently lower than the melting point of the first organic material constituting the core portion, a setting tolerance of the heating temperature in the heating step can be expanded, and temperature setting for obtaining a desired structure can be made easier. For example, the melting point of the first organic material is preferably 60°C or more higher, more preferably 70°C or more higher, and still more preferably 80°C or more higher than the melting point of the third organic material.

Note that, the melting point of the hot melt powder (third organic material) is preferably 80°C or higher, and more preferably 90°C or higher. In addition, the melting point of the hot melt powder (third organic material) is preferably 180°C or lower, and more preferably 150°C or lower. Examples of the component constituting the hot melt powder include a polyethylene, a polyester, a polyamide, and ethylene vinyl acetate.

### (Content of Hot Melt Powder)

In the case where the hot melt powder is contained in the materials of the heat insulation material in order to suppress the falling off of the inorganic particle, a powder falling suppression effect can be obtained even when a content thereof is very small. Therefore, the content of the hot melt powder is preferably 0.5 mass% or more, and more preferably 1 mass% or more, with respect to a total mass of the materials of the heat insulation material.

On the other hand, when the content of the hot melt powder is increased, the content of the inorganic particle or the like decreases relatively. Therefore, in order to obtain a desired heat insulation performance, the content of the hot melt powder is preferably 5 mass% or less, and more preferably 4 mass% or less, with respect to the total mass of the materials of the heat insulation material.

In the case where the hot melt powder is contained as the material for the heat insulation material, the heating temperature in the heating step is set to preferably 10°C or more higher, and more preferably 20°C or more higher than the higher one of the melting point of the second organic material constituting the sheath portion and the melting point of the third organic material constituting the hot melt powder. On the other hand, the heating temperature is set to preferably 10°C or more lower, and more preferably 20°C or more lower than the melting point of the first organic material constituting the core portion. By setting the heating temperature like this, a strong framework can be formed, the strength of the sheet can be further improved, and the falling off of the inorganic particle can be prevented.

Note that, the heat insulation material can further contain other binders, colorants, and the like, if necessary. All of these are useful for reinforcing the heat insulation material and improving the moldability, and a total amount thereof is preferably 10 mass% or less with respect to the total mass of the heat insulation material.

Next, a method for producing a heat transfer suppression sheet according to the present embodiment will be described with reference to Figs. 1A to 1C.

### [Method for Producing Heat Transfer Suppression Sheet]

The heat transfer suppression sheet 10 according to the first embodiment can be produced, for example, by the following method.

### <Stacking Step>

First, the inorganic particle and other materials are molded by a wet method or a dry method to obtain the heat insulation material 11 processed into a sheet shape. Next, the heat insulation material 11 and the elastic sheet 12 are stacked such that at least one heat insulation material main surface 11a faces one elastic sheet main surface 12a of the elastic sheet 12 prepared in advance, thereby obtaining the stacked body 14.

### <Shrinking Step>

Thereafter, the stacked body 14 is placed on a planar resin film, and then, for example, the planar resin film is bent to cover an upper surface of the stacked body 14 with the planar resin film. Thereafter, the planar resin film on a lower surface and the planar resin film on the upper surface of the stacked body 14 are heated and fused to each other while applying a pressure around the stacked body 14. Accordingly, the surface of the stacked body 14 is covered with the resin film. Thereafter, the resin film around the stacked body 14 is shrunk by heating, and the resin film is shrunk by heating such that the resin film presses at least one end surface of a plurality of elastic sheet end surfaces, thereby bringing the resin film 13 into close contact with an outer surface of the stacked body 14. By this shrinking step, the pressed end surface has a shape inclined inward as being away from the surface of the heat insulation material 11.

Note that, as shown in Figs. 3A to 3C, the heat transfer suppression sheet may have a shape in which, among the plurality of elastic sheet end surfaces, the first end surface 12b is substantially parallel to the thickness direction of the elastic sheet, and the second end surface 12c is inclined inward as being away from the heat insulation material 11. Although not shown, the first end surface 12b and the second end surface 12c of the heat transfer suppression sheet are inclined, but the first end surface 12b and the second end surface 12c may have different inclination angles. Such a heat transfer suppression sheet can be produced, for example, as follows.

Similar to the method for producing the heat transfer suppression sheet 10, the stacked body 14 is placed on a planar resin film, and then an upper surface of the stacked body 14 is also covered with the planar resin film. Next, the planar resin film on a lower surface and the planar resin film on the upper surface of the stacked body 14 are heated and fused to each other while applying a pressure around the stacked body 14. At this time, when the planar resin film is fused at a position away from the stacked body 14 or the elastic sheet 12, even when the resin film is then shrunk by heating, a pressing force applied to the elastic sheet end surface is reduced, and the inclination angle of the end surface is reduced. On the other hand, when the planar resin film is fused at a position close to the stacked body 14 or the elastic sheet 12, and the resin film is then shrunk by heating, the elastic sheet end surface is sufficiently pressed, and the inclination angle of the end surface increases. In this way, the inclination angle of the elastic sheet end surface after the resin film is shrunk can be adjusted based on the position where the planar resin film on the upper surface and the planar resin film on the lower surface are fused to each other.

In addition, for example, even in the case where a resin film having different shrinkage ratios in a predetermined first direction and a second direction orthogonal to the first direction is used, the inclination angle of the first end surface 12b and the inclination angle of the second end surface 12c of the elastic sheet 12 can be made different from each other.

Further, in the present invention, as in the heat transfer suppression sheet 23 shown in Fig. 4, the pair of first end surfaces 12b₁ and 12b₂ of the elastic sheet 12 may have different inclination angles. Such a heat transfer suppression sheet 23 can be produced, for example, by covering the stacked body 14 with a planar resin film and adjusting the heat treatment temperature when shrinking the resin film by heating. Specifically, as a first thermal shrinking step, the entire resin film is shrunk to bring the resin film into close contact with the surface of the stacked body 14. Thereafter, as a second thermal shrinking step, a region including the end surface to be more inclined among the elastic sheet end surfaces is heat-treated at a temperature higher than that in the first thermal shrinking step, and the resin film is further shrunk. Accordingly, only a desired end surface of the elastic sheet 12 can be pressed by the resin film to be inclined.

### [Battery Pack]

A battery pack according to an embodiment of the present invention includes the heat transfer suppression sheet described in the above [Heat Transfer Suppression Sheet]. That is, as shown in Fig. 2, the battery pack 100 includes the plurality of battery cells 20, and for example, the above heat transfer suppression sheet 10, and the battery cells 20 are connected in series or in parallel. The heat transfer suppression sheet 10 is interposed between adjacent battery cells 20. In addition, the battery cells 20 and the heat transfer suppression sheet 10 are housed in a battery case 30.

When the battery cell 20 and the heat transfer suppression sheet 10 are assembled in the battery pack 100 described above, it is possible to suppress a strong force from being applied to the easily deformable region of the battery cell 20. In addition, when the battery cell 20 expands, a central portion of the resin film 13 having a low surface pressure can absorb the expansion, and thus it is possible to prevent an uneven pressing force from being applied to the battery cell 20. Therefore, the lifetime of the battery cell 20 assembled in the battery pack 100 can be improved.

Note that, although not shown, the heat transfer suppression sheet described in the above [Heat Transfer Suppression Sheet] can be disposed not only between the plurality of battery cells but also in a narrow region between the battery cell and the battery case, for example. In this manner, even in the case where the heat transfer suppression sheet is disposed between the battery cell and the battery case, application of an uneven pressing force to the battery cell can be suppressed, and the lifetime of the battery cell can be improved.

In addition, since the heat transfer suppression sheet according to the present invention includes a heat insulation material, it has an excellent heat insulation property. Therefore, in the case where the battery pack 100 to which the heat transfer suppression sheet is applied is used in an electric vehicle (EV) or the like and is disposed under a passenger's floor, even when the battery cell ignites, the safety of the passenger can be ensured.

In this case, when the heat transfer suppression sheet is disposed between the battery cell and the battery case, it is not necessary to newly prepare a flame retardant material or the like, and a safe battery pack can be formed at a low cost.

Although various embodiments have been described above, it is needless to say that the present invention is not limited to such examples. It is apparent to those skilled in the art that various changes and modifications can be conceived within the scope of the claims, and it is understood that such changes and modifications are also encompassed within the technical scope of the present invention. In addition, the constituent elements in the above embodiments may be freely combined without departing from the gist of the present invention.

Note that, the present application is based on a Japanese patent application (Japanese Patent Application No. 2023-045369) filed on March 22, 2023, and the contents thereof are incorporated herein by reference.

### REFERENCE SIGNS LIST

10, 22, 23 heat transfer suppression sheet
11 heat insulation material
11a heat insulation material main surface
12 elastic sheet
12a elastic sheet main surface
12b first end surface
12c second end surface
13 resin film
14 stacked body
20 battery cell
30 battery case
100 battery pack

## Claims

1. A heat transfer suppression sheet comprising:
a heat insulation material containing an inorganic particle;
an elastic sheet stacked on the heat insulation material; and
a resin film covering the heat insulation material and the elastic sheet, wherein
the heat insulation material has a pair of heat insulation material main surfaces orthogonal to a thickness direction,
the elastic sheet has a pair of elastic sheet main surfaces orthogonal to a thickness direction and a plurality of elastic sheet end surfaces connecting the pair of elastic sheet main surfaces,
the heat insulation material and the elastic sheet are stacked such that at least one of the heat insulation material main surfaces and the one elastic sheet main surface face each other, and
at least one end surface of the plurality of elastic sheet end surfaces is pressed by the resin film to be inclined inward as being away from the heat insulation material.

2. The heat transfer suppression sheet according to claim 1, wherein a surface pressure at a central portion of the elastic sheet main surface is lower than a surface pressure in an end region closer to at least one end surface side pressed by the resin film than the central portion.

3. The heat transfer suppression sheet according to claim 1, wherein
the plurality of elastic sheet end surfaces include a pair of first end surfaces facing each other and a pair of second end surfaces facing each other and extending in a direction different from an extending direction of the first end surfaces, and
among the first end surface and the second end surface, one is inclined inward as being away from the heat insulation material, and the other is substantially parallel to a thickness direction of the elastic sheet.

4. The heat transfer suppression sheet according to claim 1, wherein
the plurality of elastic sheet end surfaces include a pair of first end surfaces facing each other and a pair of second end surfaces facing each other and extending in a direction different from an extending direction of the first end surfaces,
the first end surface and the second end surface are both inclined inward as being away from the heat insulation material, and
an inclination angle of the first end surface with respect to a thickness direction of the elastic sheet and an inclination angle of the second end surface with respect to the thickness direction of the elastic sheet are different from each other.

5. The heat transfer suppression sheet according to claim 1, wherein
the plurality of elastic sheet end surfaces include a pair of first end surfaces facing each other and a pair of second end surfaces facing each other and extending in a direction different from an extending direction of the first end surfaces, and
facing end surfaces in at least one of the first end surfaces and the second end surfaces have different inclination angles with respect to a thickness direction of the elastic sheet.

6. The heat transfer suppression sheet according to claim 1, wherein the resin film contains at least one kind of resin selected from a polyethylene, a polypropylene, a polystyrene, a polyethylene terephthalate, and vinyl chloride.

7. The heat transfer suppression sheet according to claim 1, wherein the heat insulation material and the elastic sheet are enclosed with the resin film.

8. The heat transfer suppression sheet according to claim 1, wherein the elastic sheet contains at least one kind of material selected from a rubber and a thermoplastic elastomer.

9. The heat transfer suppression sheet according to claim 1, wherein the heat insulation material further contains at least one kind selected from an inorganic fiber, an organic fiber, and an organic particle.

10. A method for producing a heat transfer suppression sheet according to any one of claims 1 to 9, the method comprising:
a stacking step of stacking the heat insulation material and the elastic sheet such that at least one of the heat insulation material main surfaces and the one elastic sheet main surface face each other to obtain a stacked body; and
a shrinking step of covering a surface of the stacked body with the resin film and shrinking the resin film by heating such that the resin film presses at least one end surface of the plurality of elastic sheet end surfaces, wherein
in the shrinking step, at least one end surface of the plurality of elastic sheet end surfaces is inclined inward as being away from the heat insulation material.

11. A battery pack comprising:
a plurality of battery cells; and
the heat transfer suppression sheet according to any one of claims 1 to 9, wherein
the plurality of battery cells are connected in series or in parallel.
